(19) **Europäisches Patentamt / European Patent Office / Office européen des brevets**

(11) **EP 3 844 664 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **19723727.4**

(22) Anmeldetag: **03.05.2019**

(51) Internationale Patentklassifikation (IPC):
*G06V 20/52* (2022.01)     *G06V 40/20* (2022.01)
*B60W 60/00* (2020.01)     *B60W 30/095* (2012.01)

(52) Gemeinsame Patentklassifikation (CPC):
**B60W 30/095; B60W 30/0956; B60W 60/00274;
G06V 20/53; G06V 40/23;** B60W 2554/4029;
B60W 2554/408; B60W 2556/40

(86) Internationale Anmeldenummer:
**PCT/EP2019/061339**

(87) Internationale Veröffentlichungsnummer:
**WO 2020/043328 (05.03.2020 Gazette 2020/10)**

(54) **VERFAHREN ZUR VORHERSAGE ZUMINDEST EINES ZUKÜNFTIGEN GESCHWINDIGKEITSVEKTORS UND/ODER EINER ZUKÜNFTIGEN POSE EINES FUSSGÄNGERS**

METHOD FOR PREDICTING AT LEAST ONE FUTURE VELOCITY VECTOR AND/OR A FUTURE POSE OF A PEDESTRIAN

PROCÉDÉ POUR LA PRÉDICTION D'AU MOINS UN VECTEUR DE VITESSE FUTUR ET/OU UNE POSE FUTURE D'UN PIÉTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2018 DE 102018214635**

(43) Veröffentlichungstag der Anmeldung:
**07.07.2021 Patentblatt 2021/27**

(73) Patentinhaber: **Robert Bosch GmbH
70442 Stuttgart (DE)**

(72) Erfinder:
• **PALMIERI, Luigi
  71229 Leonberg (DE)**
• **RUDENKO, Andrey
  70499 Stuttgart (DE)**
• **LINDER, Timm
  71032 Boeblingen (DE)**

(56) Entgegenhaltungen:
CN-A- 106 663 193        CN-A- 106 663 193
US-A1- 2013 329 958      US-A1- 2013 329 958

• BECKER DANIEL ET AL: "Vehicle and pedestrian collision prevention system based on smart video surveillance and C2I communication", 17TH INTERNATIONAL IEEE CONFERENCE ON INTELLIGENT TRANSPORTATION SYSTEMS (ITSC), IEEE, 8 October 2014 (2014-10-08), pages 3088 - 3093, XP032685889, [retrieved on 20141114], DOI: 10.1109/ITSC.2014.6958186
• BECKER DANIEL ET AL: "Vehicle and pedestrian collision prevention system based on smart video surveillance and C2I communication", 17TH INTERNATIONAL IEEE CONFERENCE ON INTELLIGENT TRANSPORTATION SYSTEMS (ITSC), IEEE, 8 October 2014 (2014-10-08), pages 3088 - 3093, XP032685889, DOI: 10.1109/ ITSC.2014.6958186

**Beschreibung**

Die vorliegende Erfindung betrifft ein Verfahren zur Vorhersage zumindest eines zukünftigen Geschwindigkeitsvektors und/oder einer zukünftigen Pose eines Fußgängers in einem Vorhersagebereich. Des Weiteren betrifft die vorliegende Erfindung ein Computerprogramm, das jeden Schritt des Verfahrens ausführt, sowie ein maschinenlesbares Speichermedium, welches das Computerprogramm speichert. Schließlich betrifft die Erfindung ein elektronisches Steuergerät, welches eingerichtet ist, um das Verfahren auszuführen.

Stand der Technik

Um eine Kollision von selbstfahrenden Fahrzeugen oder Robotern mit Fußgängern zu verhindern, werden Verfahren eingesetzt, die zukünftige Geschwindigkeitsvektoren und Posen von Fußgängern voraussagen.

In der US 9,233,659 B2 wird ein Kollisionswarnsystem beschrieben, das eine auf einem Fahrzeug montierte Kamera und einen Prozessor verwendet. Eine Warnung vor einer Kollision des Fahrzeugs mit einem Fußgänger wird auf der Grundlage einer Größenänderung eines von der Kamera erfassten Bildes des Fußgängers ausgegeben. Zur weiteren Validierung der Warnung werden zeitliche Veränderungen des Bildes und im Bild erfasste Straßenmarkierungen berücksichtigt. Dabei kann eine laterale Bewegung des Fußgängers erkannt werden, wenn dieser eine Straßenmarkierung oder eine Bordsteinkante passiert.

In der WO 2015/177648 A1 wird ein Verfahren zum Detektieren von Fußgängern beschrieben, das Fußgänger in Bildern erkennen kann. Dabei wird ausgewertet, ob eine Gefahr besteht, dass der Fußgänger mit einem Fahrzeug kollidiert. Hierzu wird eine zukünftige Position des Fußgängers und des Fahrzeugs aus deren jeweiliger Bewegungsrichtung und Geschwindigkeit extrapoliert.

Die US 2007/0230792 A1 beschreibt ein Verfahren, mit dem erkannt werden kann, ob ein Fußgänger in den Fahrbereich eines Fahrzeugs geraten könnte. Hierzu werden innerhalb von mittels einer Kamera aufgezeichneten Bildern Fußgänger identifiziert. Diese werden klassifiziert, indem ihr Aufenthaltsort und ihre Trajektorie mit dem Verlauf einer Bordsteinkante verglichen werden. Wenn die Klassifizierung ergibt, dass sich der Fußgänger auf der Straße befindet, wird eine Kollisionswarnung ausgegeben.

Aus der US 2013/329958 A1 ist ein Verfahren bekannt, in dem Personen im Sichtfeld von Kameras verfolgt werden. Für den Fall, dass eine Person sich aus dem Sichtfeld einer Kamera heraus bewegt, wird aufgrund ihrer Bewegungsrichtung und Geschwindigkeit vorausgesagt, im Sichtfeld welcher anderen Kamera sie voraussichtlich wieder auftauchen wird, sodass in diesem Sichtfeld gezielt nach ihr gesucht werden kann. Dazu wird innerhalb einer Gruppe von Personen nach einer anderen Person gesucht, die ein besonders prägnantes Aussehen aufweist und anstelle der eigentlichen Zielperson diese prägnante Person zu verfolgen. Dabei wird einmalig erfasst, in welcher Richtung und welchem Abstand sich die eigentliche Zielperson relativ zur prägnanten Person bewegt und diese Relativposition wird auch in einem blinden Bereich zwischen zwei Kameras fortgeschrieben.

Der Artikel D. Becker et al, Vehicle and Pedestrian Collision Prevention System based on Smart Video Surveillance and C2I Communication, 17th International IEEE Conference on Intelligent Transportation Systems (ITSC), IEEE, 2014, Seiten 3088 - 3093 offenbart, das Ergebnis der Vorhersage eines zukünftigen Geschwindigkeitsvektors eines Fußgängers zu verwenden, um ein selbstfahrendes Fahrzeug so zu steuern, dass eine Kollision mit dem Fußgänger vermieden wird. Hierzu wird ein Adhoc-Netzwerk aus einer Vielzahl von stationären, in der Umgebung des selbstfahrenden Fahrzeugs angeordneten Kameras erzeugt, um mittels dieser Kameras einen Fußgänger zu erkennen und seine Bewegungsrichtung und Geschwindigkeit zu erkennen.

Die CN 106 663 193 A beschreibt ein Detektionssystem für ein Kraftfahrzeug. Dieses weist ein Bilderfassungsgerät auf, mit dem eine Bordsteinkante erkannt werden kann.

Offenbarung der Erfindung

Das Verfahren zur Vorhersage zumindest eines zukünftigen Geschwindigkeitsvektors und/oder einer zukünftigen Pose eines Fußgängers in einem Vorhersagebereich sieht vor, dass bei der Vorhersage nicht nur Daten über den betreffenden Fußgänger, sondern auch eine statische Karte des Vorhersagebereiches und aktuelle Geschwindigkeitsvektoren weiterer Fußgänger in dem Vorhersagebereich bei der Vorhersage berücksichtigt werden. Um eine Kollision mit einem Fußgänger wirksam verhindern zu können, ist es erforderlich, nicht nur dessen aktuelle Position und seinen aktuellen Geschwindigkeitsvektor zu kennen, die mittels Sensoren ermittelt werden können, sondern auch vorherzusagen, wie sich der Geschwindigkeitsvektor und die Pose des Fußgängers zukünftig ändern werden, um rechtzeitig eine Kollisionswarnung ausgeben zu können. Insbesondere dann, wenn das Verfahren verwendet wird, um die Kollision eines selbstfahrenden Fahrzeugs, das sich mit hoher Geschwindigkeit bewegt, mit einem Fußgänger zu vermeiden, genügt es nicht, Informationen über dessen aktuellen Aufenthaltsort sowie seine aktuelle Bewegungsrichtung und Geschwindigkeit zu kennen. Zukünftige Änderungen seines Geschwindigkeitsvektors können dazu führen, dass eine Situation, die bisher als ungefährlich eingestuft wurde, sich zu einem potenziellen Kollisionsszenario verändert. In diesem Fall muss noch ausreichend Zeit zur Verfügung stehen, um das Fahrzeug abzubremsen oder eine Ausweichbewegung ausführen zu lassen, bevor es zu einer Kollision mit dem Fußgänger kommt.

Die Karte des Vorhersagebereiches durch den sich ein Fahrzeug zukünftig bewegen wird, wird von Sensoren des Fahrzeugs erstellt. Die Karte enthält alle geographischen Merkmale des Vorhersagebereiches. Aus der Karte wird ein Bewegungsplan erstellt, in welchem erkennbar ist, in welchen Abschnitten des Vorhersagebereichs, welcher nicht durch Hindernisse blockiert ist, sich Fußgänger bewegen können.

Während Verfahren des Standes der Technik lediglich zukünftige Änderungen des Geschwindigkeitsvektors aufgrund stationärer Hindernisse in einer stationären Karte oder soziale Informationen ohne Informationen über die Umgebung berücksichtigen, sieht das vorliegende Verfahren vor, dass sowohl eine Karte, als auch die Bewegung anderer Fußgänger in die Vorhersage einbezogen werden. Dabei werden diese insbesondere nicht lediglich als mobile Hindernisse angesehen, sondern es können auch darüber hinausgehende Interaktionen zwischen den Fußgängern in die Vorhersage einbezogen werden.

Vorzugsweise werden für die Vorhersage Fußgänger in dem Vorhersagebereich in Gruppen zusammengefasst. Aus aktuellen Posen und aktuellen Geschwindigkeitsvektoren aller Mitglieder einer Gruppe kann dabei eine aktuelle Pose und ein aktueller Geschwindigkeitsvektor der Gruppe ermittelt werden. Fußgänger werden insbesondere dann in einer Gruppe zusammengefasst, wenn aus ihren aktuellen Geschwindigkeitsvektoren ableitbar ist, dass diese sich als Gruppe bewegen. Dies wird insbesondere dann gefolgert, wenn sich die Geschwindigkeitsvektoren aller Gruppenmitglieder maximal um eine vorgegebene Schwelle voneinander unterscheiden. Es erleichtert die Durchführung des Verfahrens auf einem elektronischen Rechengerät oder Steuergerät, wenn alle Gruppenmitglieder in der Vorhersage durch eine gemeinsame Pose und einen gemeinsamen Geschwindigkeitsvektor einheitlich behandelt werden können.

Weiterhin ist es bevorzugt, dass soziale Interaktionen zwischen den Fußgängern bei der Vorhersage berücksichtigt werden. Bei Fußgängern, die Mitglieder einer gemeinsamen Gruppe sind, können solche sozialen Interaktionen insbesondere in attraktiven Interaktionen bestehen, die dazu führen, dass sich die Mitglieder der Gruppe nie weiter als eine vorgebbare Strecke von einem Mittelpunkt der Gruppe, vom nächsten Gruppenmitglied oder vom Führer der Gruppe entfernen. Dies kann dazu führen, dass die Gruppenmitglieder, wenn sie einem Hindernis ausweichen müssen, nicht den kürzestmöglichen Weg wählen, sondern stattdessen einen längeren Weg, auf dem der Zusammenhalt der Gruppe gewährleistet bleibt. Auch zwischen Fußgängern, die nicht Teil einer Gruppe sind, können soziale Interaktionen für die Vorhersage relevant sein. So kann ein Fußgänger beispielsweise kurzzeitig stehenbleiben, um einen anderen Fußgänger vorbeizulassen oder er kann diesem ausweichen. Eine soziale Interaktion bei einer Ausweichbewegung kann insbesondere auch darin bestehen, dass nicht einer der Fußgänger seinen Weg unbeeinträchtigt fortsetzt, während der andere ausweicht, sondern dass beide eine Ausweichbewegung vollziehen.

Es ist weiterhin bevorzugt, dass jedem Fußgänger ein Ziel zugewiesen wird. Diese Zuweisung kann insbesondere aufgrund seines aktuellen Geschwindigkeitsvektors erfolgen. Bei der Vorhersage wird berücksichtigt, dass der Fußgänger sich auf dieses Ziel zubewegt. Auch wenn er beispielsweise durch soziale Interaktionen innerhalb einer Gruppe oder durch Interaktionen mit Fußgängern, die nicht Teil seiner Gruppe sind oder durch andere Faktoren, wie beispielsweise stationäre Hindernisse vorübergehend vom unmittelbaren Weg auf dieses Ziel zu abgebracht wird, so wird in der Vorhersage doch davon ausgegangen, dass er langfristig immer wieder auf einen Weg auf dieses Ziel zu zurückkehrt.

Vorzugsweise wird die Vorhersage in mehreren zeitlichen Teilschritten durchgeführt. In jedem dieser Teilschritte werden alle bei der Vorhersage der Geschwindigkeitsvektoren berücksichtigten Werte neu berechnet. Solche Werte sind beispielsweise Geschwindigkeitsvektoren und Posen anderer Fußgänger und die sozialen Interaktionen mit jedem dieser Fußgänger. Auf diese Weise wird in jedem zeitlichen Teilschritt eine Vorhersage erhalten, wobei die Vorhersagen der ersten Teilschritte noch sehr genau sind und die Genauigkeit abnimmt, je weiter die Vorhersage in die Zukunft reicht.

In jedem der Teilschritte kann eine zukünftige Pose des Fußgängers ermittelt werden. Aus allen ermittelten zukünftigen Posen ist es insbesondere möglich eine Bewegungskarte des Fußgängers zu erstellen, welche zur Planung der Bewegung eines selbstfahrenden Fahrzeugs oder eines Roboters verwendet werden kann.

Aktuelle Posen und aktuelle Geschwindigkeitsvektoren der Fußgänger können insbesondere mittels mindestens eines Sensors ermittelt werden, der ausgewählt ist aus der Gruppe, bestehend aus Monokularsensoren, Stereosensoren und Tiefensensoren. Als Tiefensensor eignet sich beispielsweise ein LIDAR-Sensor oder eine RGB-D Kamera.

Das Computerprogramm ist eingerichtet, jeden Schritt des Verfahrens durchzuführen, insbesondere wenn es auf einem Rechengerät oder auf einem elektronischen Steuergerät abläuft. Insbesondere weist es ein Vorhersagemodul mit einem Bewegungsplan, Tracklets und soziale Kontextinformationen auf, die für die Vorhersage verwendet werden. Es ermöglicht die Implementierung unterschiedlicher Ausführungsformen des Verfahrens in einem elektronischen Steuergerät, ohne hieran bauliche Veränderungen vornehmen zu müssen. Hierzu ist es auf dem maschinenlesbaren Speichermedium gespeichert.

Durch Aufspielen des Computerprogramms auf ein herkömmliches elektronisches Steuergerät, wird das elektronische Steuergerät erhalten, welches eingerichtet ist, um mittels des Verfahrens einen zukünftigen Geschwindigkeitsvektor und/oder eine zukünftigen Pose eines Fußgängers vorherzusagen.

Kurze Beschreibung der Zeichnungen

Ausführungsbeispiele der Erfindung sind in den Zeichnungen dargestellt und werden in der nachfolgenden Beschreibung näher erläutert.

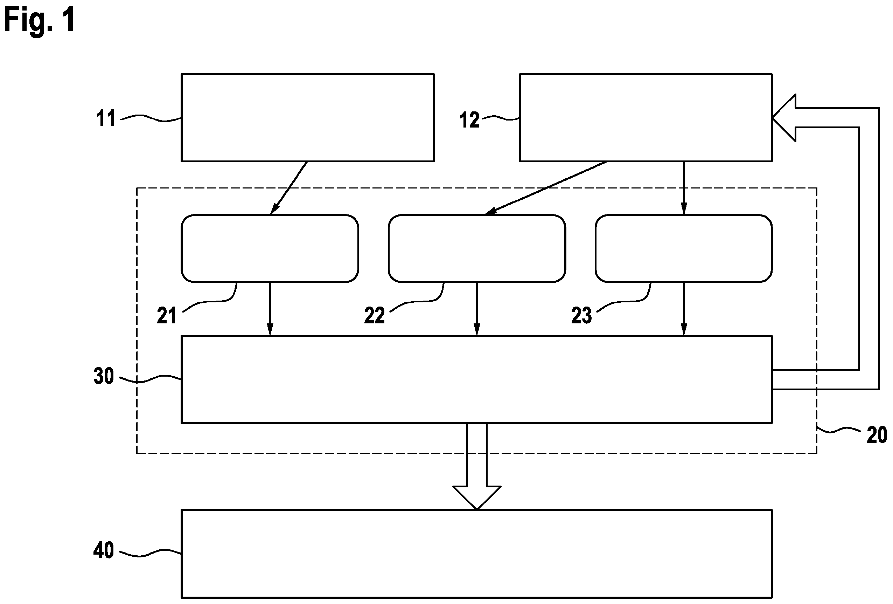

Fig. 1 zeigt schematisch eine Systemarchitektur eines selbstfahrenden Fahrzeugs, welches mittels eines Ausführungsbeispiels des erfindungsgemäßen Verfahrens eine Vorhersage zumindest eines zukünftigen Geschwindigkeitsvektors und einer zukünftigen Pose eines Fußgängers vornimmt.

Fig. 2 zeigt schematisch den Ablauf einer Vorhersage eines zukünftigen Geschwindigkeitsvektors und einer zukünftigen Pose eines Fußgängers in einem Ausführungsbeispiel des erfindungsgemäßen Verfahrens.

Fig. 3 stellt schematisch soziale Interaktionen zwischen mehreren Fußgängern dar, die in einem Ausführungsbeispiel des erfindungsgemäßen Verfahrens zur Vorhersage zumindest eines zukünftigen Geschwindigkeitsvektors und einer zukünftigen Pose eines Fußgängers verwendet werden.

Fig. 4 zeigt schematisch die Bewegung einer Gruppe von Fußgängern relativ zu einem selbstfahrenden Fahrzeug in einem Verfahren gemäß einem Ausführungsbeispiel der Erfindung.

Fig. 5 zeigt in einem Diagramm die Negative Log-Probability als Funktion der Vorhersagedauer in Simulationen gemäß Vergleichsbeispielen und einem Ausführungsbeispiel der Erfindung.

Fig. 6 zeigt in einem Diagramm die Modified Hausdorff Distance als Funktion der Vorhersagedauer in Simulationen gemäß Vergleichsbeispielen und einem Ausführungsbeispiel der Erfindung.

Ausführungsbeispiele der Erfindung

In einem Ausführungsbeispiel des Verfahrens zur Vorhersage zumindest eines zukünftigen Geschwindigkeitsvektors und einer zukünftigen Pose eines Fußgängers, um eine Kollision des Fußgängers mit einem selbstfahrenden Fahrzeug zu vermeiden, wird von Sensoren des Fahrzeugs eine Karte 11 eines Bereichs erstellt, durch den sich das Fahrzeug zukünftig bewegen wird. Die Karte 11 enthält alle geographischen Merkmale des Bereichs. Es soll eine Vorhersage darüber getroffen werden, ob innerhalb dieses Bereichs Fußgänger in den Bewegungspfad des Fahrzeugs gelangen könnten, so dass die Gefahr einer Kollision besteht. Deshalb wird dieser Bereich im Folgenden als Vorhersagebereich bezeichnet. Mittels der Sensoren werden Bilder des Vorhersagebereichs erstellt, und es erfolgt eine Erkennung 12 von Personen innerhalb der Bilder. In einem Vorhersagemodul 20 wird nun aus der Karte 11 ein Bewegungsplan 21 erstellt, in welchem erkennbar ist, in welchen Abschnitten des Vorhersagebereichs, welcher nicht durch Hindernisse blockiert ist, sich Fußgänger bewegen können. Die über die einzelnen Fußgänger erfassten Daten werden in Tracklets 22 und in soziale Kontextinformationen 23 aufgeteilt. Die Tracklets 22 umfassen die aktuellen Geschwindigkeitsvektoren und die aktuellen Posen der Fußgänger. Jeder Geschwindigkeitsvektor enthält dabei Informationen über die Bewegungsrichtung eines Fußgängers sowie über seine Bewegungsgeschwindigkeit. Die Pose gibt seine Ausrichtung an. Die sozialen Kontextinformationen 23 werden durch Bildanalyse gewonnen und ermöglichen eine Aussage darüber, welche einzelnen Fußgänger Teil einer Gruppe mit einem gemeinsamen Ziel sind. Der Bewegungsplan 21, die Tracklets 22 und die sozialen Kontextinformationen 23 werden der Vorhersage 30 zur Verfügung gestellt. Das Ergebnis der Vorhersage wird zum einen an eine Steuerung 40 des selbstfahrenden Fahrzeugs übergeben, um eine Kollision mit Fußgängern zu vermeiden. Zum anderen wird es auch verwendet, um bei der nächsten Durchführung der Erkennung 12 von Fußgängern in den aufgenommenen Bildern diese Erkennung 12 zu erleichtern.

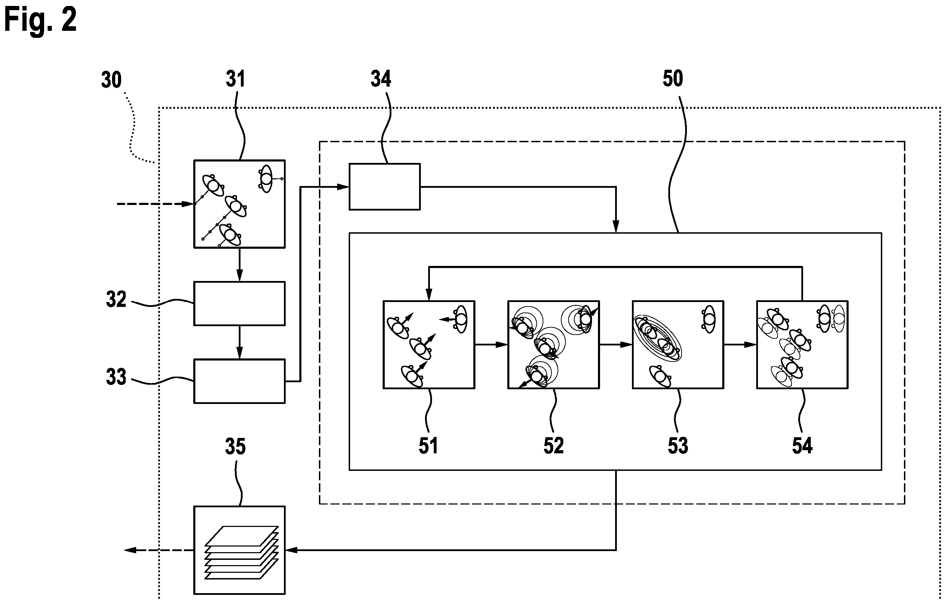

In Fig. 2 wird detailliert dargestellt, wie die Vorhersage 30 abläuft. In einem Schritt 31 werden der Bewegungsplan 21, die Tracklets 22 und die sozialen Kontextinformationen 23 erfasst, wobei einzelne Fußgänger aufgrund der sozialen Kontextinformationen 23 zu Gruppen zusammengefasst werden. Im nächsten Schritt 32 werden aufgrund der aktuellen Geschwindigkeitsvektoren der Fußgänger deren Ziele extrapoliert. Hierzu werden mehrere mögliche Bewegungsrouten und Ziele der Fußgänger berücksichtigt. Diese werden im nächsten Schritt 33 unter Verwendung des Bewegungsplans 21 so korrigiert, dass lediglich aufgrund der Karte 11 plausible Ziele verbleiben. Die gesammelten Daten über aktuelle Geschwindigkeitsvektoren, aktuelle Posen und Ziele jedes Fußgängers werden im nächsten Schritt 34 an eine Prädiktionsfunktion 50 übergeben. Diese weist vier Teilschritte auf. In einem ersten Teilschritt 51 wird ermittelt, welchen Weg jeder Fußgänger in einem vorgegebenen Zeitintervall aufgrund seines Ziels, seines aktuellen Geschwindigkeitsvektors und seiner aktuellen Pose voraussichtlich im Vorhersagebereich wählen wird. In einem zweiten Teilschritt 52 wird dieser Weg korrigiert, indem soziale Interaktionen jedes Fußgängers mit benachbarten Fußgängern berücksichtigt werden. Diese sozialen Interaktionen stellen aufgrund typischer Bewegungsmuster von Fußgängern wahrscheinliche Wege der Kollisionsvermeidung mit anderen Fußgängern dar. In einem dritten Teilschritt 53 erfolgt eine erneute Korrektur aufgrund sozialer Interaktionen zwischen Gruppenmitgliedern. Die sozialen Interaktionen beeinflussen die Bewegung so, dass Gruppen nicht auseinandergerissen werden. In einem vierten Teilschritt 54 werden aufgrund der Ergebnisse der ersten drei Teilschritte 51, 52, 53 die aktuellen Posen und aktuellen Geschwindigkeitsvektoren durch vorhergesagte zukünftige Posen und zukünftige Geschwindigkeitsvektoren am Ende des Zeitintervalls ersetzt. Die so ermittelten zukünftigen Posen werden in einer Bewegungskarte 35 eingetragen und dort mit dem der Vorhersage zugrundeliegenden Zeitintervall verknüpft. Dann werden die Teilschritte 51 bis 54 erneut durchgeführt, wobei anstelle der aus dem Schritt 34 übergebenen aktuellen Geschwindigkeitsvektoren und aktuellen Posen nun die zukünftigen Geschwindigkeitsvektoren und zukünftigen Posen der Fußgänger verwendet werden, welche im Schritt 54 ermittelt wurden. Die Ziele der Fußgänger aus dem Schritt 34 werden hingegen beibehalten. Mit jedem Durchlauf der Teilschritte 51 bis 54 wird ein weiterer Eintrag in der Bewegungskarte 35 für ein neues Zeitintervall erzeugt. Die Bewegungskarte 35 wird schließlich an die Steuerung 40 übergeben, so dass diese für jedes Zeitintervall die wahrscheinlichsten Aufenthaltsorte aller Personen im Vorhersagebereich auslesen kann.

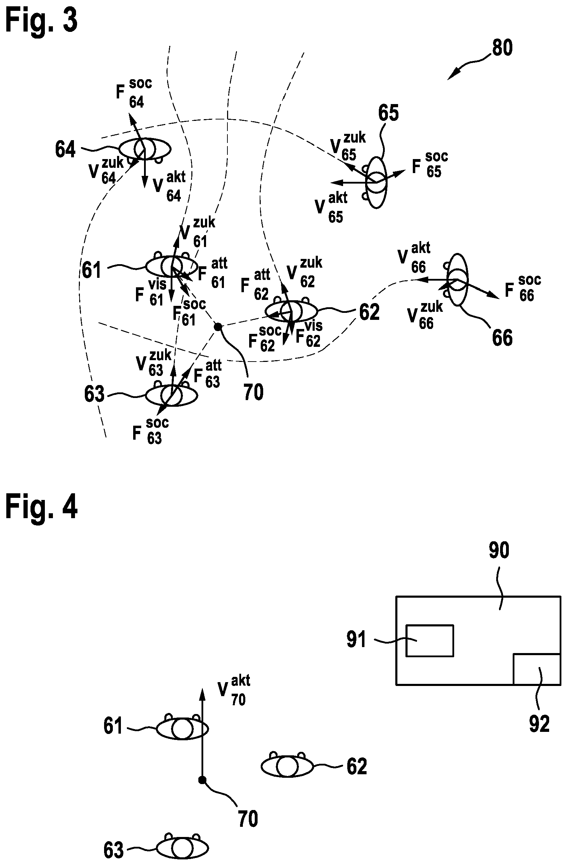

Der Ablauf der Teilschritte 51 bis 53 wird in Fig. 3 weiter verdeutlicht. Dort ist die Bewegung von sechs Personen 61 bis 66 dargestellt. Die ersten drei Personen 61 bis 63 bilden eine Gruppe. Diese Gruppe ist um einen Mittelpunkt 70 herum gruppiert. In dem Vorhersagebereich 80 bewegen die Mitglieder der Gruppe sich aktuell in Fig. 3 vertikal nach oben. Die aktuellen Geschwindigkeitsvektoren $v_{64\text{-}66}^{akt}$ der weiteren Fußgänger 64 bis 66 sind in der Fig. 3 durch Pfeile dargestellt. Innerhalb der Gruppe wirken auf die Gruppenmitglieder anziehende soziale Interaktionen $F_{61\text{-}63}^{att}$, durch welche diese sich auf den Mittelpunkt 70 zu bewegen. Diese anziehenden soziale Interaktionen $F_{61\text{-}63}^{att}$ können für jeden Fußgänger i gemäß Formel 1 berechnet werden:

$$F_i^{att} = \alpha \cdot U_i \cdot q \qquad \text{(Formel 1)}$$

Dabei bezeichnet $\alpha$ die Stärke eines Gruppenanziehungseffekts und $U_i$ ist ein Einheitsvektor der vom Fußgänger i zum Mittelpunkt 70 weist. Der Wert q ist ein Schwellenwert der angibt, ob die anziehende soziale Interaktion überhaupt wirkt. Liegt der Abstand zwischen dem Fußgänger i und dem Mittelpunkt 70 unter dem Schwellenwert, so gilt $F_i^{att} = 0$. Der Gruppenanziehungseffekt wird also nur dann aktiv, wenn sich der Fußgänger i um mehr als den Schwellenwert vom Mittelpunkt 70 wegbewegt.

Weitere soziale Interaktionen $F_{61\text{-}62}^{vis}$ führen dazu, dass die ersten beiden Fußgänger 61, 62 der Gruppe ihre Geschwindigkeit verringern, damit der dritte Fußgänger 63 den Anschluss an die Gruppe nicht verliert. Diese weiteren sozialen Interaktionen $F_{61\text{-}62}^{vis}$ können für jeden Fußgänger i gemäß Formel 2 berechnet werden:

$$F_i^{vis} = -\beta \cdot v_i^{akt} \cdot \gamma_i \qquad \text{(Formel 2)}$$

Dabei bezeichnet $\beta$ die Stärke einer Wechselwirkung innerhalb der Gruppe. Der Winkel zwischen dem aktuellen Geschwindigkeitsvektor $v_i^{akt}$ des Fußgängers i und seiner Blickrichtung wird mit $\gamma_i$ bezeichnet.

Eine Weiterbewegung aller Fußgänger 61 bis 66 entlang ihrer aktuellen Geschwindigkeitsvektoren ist nicht möglich, ohne dass es dabei zu einer Kollision kommt. Deshalb wirken abstoßende soziale Interaktionen $F_{61\text{-}66}^{soc}$, die jeden der Fußgänger 61 bis 66 dazu bewegen, den anderen Fußgängern auszuweichen. Diese abstoßenden sozialen Interaktionen $F_{i,j}^{soc}$ können für jeden Fußgänger i gegenüber einem anderen Fußgänger j gemäß Formel 3 berechnet werden:

$$F_{i,j}^{soc} = a_j \cdot e^{\frac{r_{i,j} - d_{i,j}}{b_j}} \cdot n_{i,j} \cdot \left( \lambda + (1 - \lambda) \cdot \frac{1 + \cos \varphi_{i,j}}{2} \right) \qquad \text{(Formel 3)}$$

Dabei bezeichnet $a_j \geq 0$ die Stärke und $b_j > 0$ die Richtung der abstoßenden sozialen Interaktion. Der Abstand zwischen den beiden Fußgängern i, j wird als $d_{i,j}$ bezeichnet und $r_{i,j}$ bezeichnet die Summe ihrer Radien. Ein Anisotropiefaktor $\lambda \in [0, 1]$ skaliert die abstoßende sozialen Interaktion in Richtung der Bewegung des Fußgängers i. Die Interaktion erreicht ihren Maximalwert, wenn der Winkel $\varphi_{i,j}$ zwischen einem normalisierten Vektor $n_{i,j}$, der vom Fußgänger i zum Fußgänger j weist, und dem aktuellen Geschwindigkeitsvektor $v_i^{akt}$ des Fußgängers i null ist. Sie wird minimal, wenn $\varphi_{i,j} = \pi$ ist.

Unter Berücksichtigung aller dieser Faktoren werden zukünftige Geschwindigkeitsvektoren $v_{61\text{-}66}^{zuk}$ der Fußgänger 61 bis 66 ermittelt, die von ihren aktuellen Geschwindigkeitsvektoren abweichen. Die zukünftige Bewegung aller Fußgänger 61 bis 66 ist dabei durch gestrichelte Linien dargestellt. Es ist erkennbar, dass sich die zukünftigen Ge-

schwindigkeitsvektoren $v_{61-66}^{zuk}$ über die einzelnen Zeitintervalle so ändern werden, dass sich jeder Fußgänger 61 bis 66 nach Passieren der anderen Fußgänger wieder auf sein ursprüngliches Ziel zu bewegen wird.

Fig. 4 zeigt wie die aktuelle Bewegung der Fußgänger 61 bis 63, die Mitglieder der Gruppe sind, durch einen gemeinsamen aktuellen Geschwindigkeitsvektor $v_{70}^{akt}$, der vom Mittelpunkt 70 der Gruppe ausgeht, dargestellt werden kann. Ein selbstfahrendes Fahrzeug 90, das in der in Fig. 4 dargestellten Situation eine horizontale Bewegung nach links geplant hat, kann die Fußgänger 61 bis 63 mittels eines Sensors 91, der vorliegend als RGB-D Kamera ausgeführt ist, erkennen. In seinem elektronischen Steuergerät 92 sagt es mittels des erfindungsgemäßen Verfahrens die Bewegung der Gruppenmitglieder voraus, um seine Bewegungsrichtung anzupassen, um seine Geschwindigkeit gegebenenfalls zu verringern oder um zu stoppen und so eine Kollision mit den Gruppenmitgliedern zu vermeiden. Weitere Fußgänger, die selbst nicht in die Bewegungsrichtung des Fahrzeugs 90 gelangen könnten, werden dennoch vom Sensor 91 erfasst und bei der Vorhersage berücksichtigt, da sie die zukünftige Bewegung der Gruppenmitglieder durch soziale Interaktionen beeinflussen können.

Auf der Grundlage der in D. Brscic, T. Kanda, T. Ikeda, T. Miyashita, "Person position and body direction tracking in large public spaces using 3D range sensors", IEEE Transactions on Human-Machine Systems, Vol. 43, No. 6, pp. 522-534, 2013 beschriebenen Simulationsumgebung des ATC-Kaufhauses in Osaka, Japan wurden eine erfindungsgemäße Vorhersage B1 und zwei Vorhersagen gemäß Vergleichsbeispielen VB1, VB2 durchgeführt. Für das Vergleichsbeispiel VB1 wurde dabei ein Vorhersageverfahren gemäß V. Karasev, A. Ayvaci, B. Heisele, S. Soatto, "Intent-aware longterm prediction of pedestrian motion", in 2016 IEEE International Conference on Robotics and Automation (ICRA), Mai 2016 verwendet. In diesem Vorhersageverfahren wird zwar eine Karte 11 des Vorhersagebereiches 80 berücksichtigt. Aktuelle Geschwindigkeitsvektoren ($v_{61-66}^{akt}$) weiterer Fußgänger 61-66 in dem Vorhersagebereich 80 werden bei der Vorhersage jedoch nicht berücksichtigt. Für das Vergleichsbeispiel VB2 wurde dabei ein Vorhersageverfahren gemäß J. Elfring, R. Van De Molengraft, M. Steinbuch, "Learning intentions for improved human motion prediction", Robotics and Autonomous Systems, vol. 62, no. 4, pp. 591-602, 2014 verwendet. In diesem Verfahren werden aktuelle Geschwindigkeitsvektoren $v_{61-66}^{akt}$ weiterer Fußgänger 61-66 in dem Vorhersagebereich 80 bei der Vorhersage berücksichtigt. Es wird jedoch keine Karte 11 des Vorhersagebereiches 80 berücksichtigt.

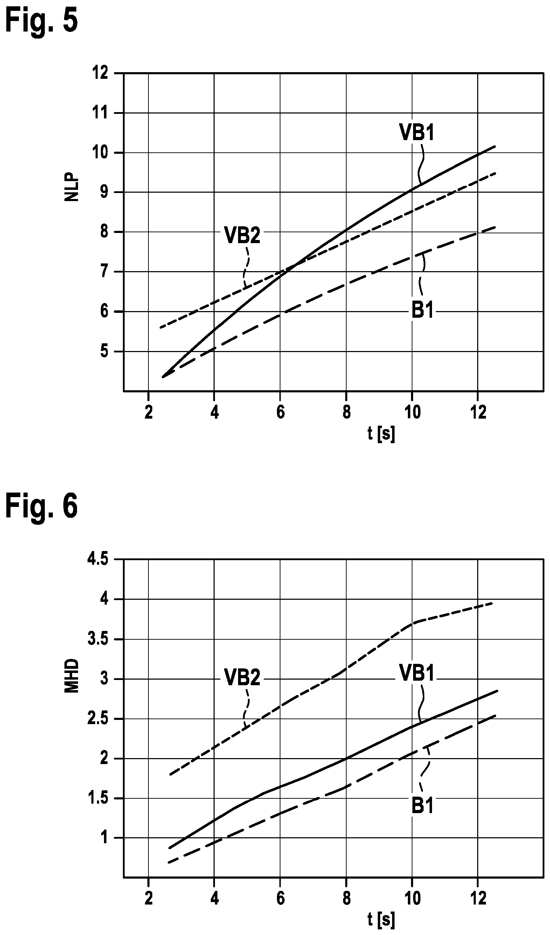

Im erfindungsgemäßen Beispiel B1 und in den Vergleichsbeispielen VB1, VB2 wurden 21 Szenarien mit insgesamt 172 Personen simuliert, worunter sich 90 Fußgänger in Gruppen befanden, mit insgesamt 15 verschieden möglichen Zielen. Es erfolgte eine Vorhersage über einen Zeitraum t von 12 Sekunden. Die bei den jeweiligen Simulationen durchschnittlich erhaltene Negative Log-Probability NLP ist in Fig. 6 dargestellt und die durchschnittlich erhaltene Modified Hausdorff Distance MHD ist in Fig. 7 dargestellt. Es ist erkennbar, dass das erfindungsgemäße Verfahren niedrigere Werte für die NLP und die MHD liefert, als die Vergleichsbeispiele VB1, VB2. Folglich ist das erfindungsgemäße Verfahren genauer.

## Patentansprüche

1. Verfahren zur Vorhersage (30) zumindest eines zukünftigen Geschwindigkeitsvektors ($v_{61-66}^{zuk}$) und/oder einer zukünftigen Pose eines Fußgängers (61-66) in einem Vorhersagebereich (80), **dadurch gekennzeichnet, dass** eine von Sensoren eines Fahrzeugs erstellte Karte (11) des Vorhersagebereiches (80), durch den sich das Fahrzeug zukünftig bewegen wird und die alle geographischen Merkmale des Vorhersagebereiches (80) enthält, und aktuelle Geschwindigkeitsvektoren ($v_{61-66}^{akt}$) weiterer Fußgänger (61-66) in dem Vorhersagebereich (80) bei der Vorhersage berücksichtigt werden, wobei aus der Karte (11) ein Bewegungsplan (21) erstellt, in welchem erkennbar ist, in welchen Abschnitten des Vorhersagebereichs (80), welcher nicht durch Hindernisse blockiert ist, sich Fußgänger (61-66) bewegen können.

2. Verfahren nach Anspruch 1, **dadurch gekennzeichnet, dass** für die Vorhersage (30) Fußgänger (61-63) in dem Vorhersagebereich (80) in Gruppen zusammengefasst werden (53), wobei aus aktuellen Posen und aktuellen Geschwindigkeitsvektoren ($v_{61-63}^{akt}$) aller Mitglieder einer Gruppe eine aktuelle Pose und ein aktueller Geschwindigkeitsvektor ($v_{70}^{akt}$) der Gruppe ermittelt werden.

3. Verfahren nach Anspruch 1 oder 2, **dadurch gekennzeichnet, dass** jeweils soziale Interaktionen ($F_{61-66}^{soc}$, $F_{61-63}^{att}$, $F_{61-62}^{vis}$) zwischen den Fußgängern (61-66) bei der Vorhersage (30) berücksichtigt werden (52).

4. Verfahren nach einem der Ansprüche 1 bis 3, **dadurch gekennzeichnet, dass** jedem Fußgänger (61-66) ein Ziel zugewiesen wird (34) und bei der Vorhersage (30) berücksichtigt wird, dass dieser sich auf das Ziel zubewegt.

5. Verfahren nach einem der Ansprüche 1 bis 4, **dadurch gekennzeichnet, dass** die Vorhersage (30) in mehreren zeitlichen Teilschritten durchgeführt wird, wobei für jeden Teilschritt alle bei der Vorhersage der Geschwindigkeits-

vektoren ($v_{61\text{-}66}^{zuk}$) berücksichtigten Werte neu berechnet werden.

6. Verfahren nach Anspruch 5, **dadurch gekennzeichnet, dass** in jedem Teilschritt eine zukünftige Pose des Fußgängers (61-66) ermittelt wird und aus allen ermittelten zukünftigen Posen eine Bewegungskarte des Fußgängers (61-66) erstellt wird (35).

7. Verfahren nach einem der Ansprüche 1 bis 6, **dadurch gekennzeichnet, dass** aktuelle Posen und aktuelle Geschwindigkeitsvektoren ($v_{61\text{-}66}^{akt}$) der Fußgänger (61-66) mittels mindestens eines Sensors (91) ermittelt werden, der ausgewählt ist aus der Gruppe, bestehend aus Monokularsensoren, Stereosensoren und Tiefensensoren.

8. Computerprogramm, welches eingerichtet ist, jeden Schritt des Verfahrens nach einem der Ansprüche 1 bis 7 durchzuführen.

9. Computerprogramm nach Anspruch 8, aufweisend ein Vorhersagemodul (20) mit einem Bewegungsplan (21), Tracklets (22) und soziale Kontextinformationen (23), die für die Vorhersage (30) verwendet werden.

10. Maschinenlesbares Speichermedium, auf welchem ein Computerprogramm nach Anspruch 8 oder 9 gespeichert ist.

11. Elektronisches Steuergerät (93), welches eingerichtet ist, um mittels eines Verfahrens nach einem der Ansprüche 1 bis 7 einen zukünftigen Geschwindigkeitsvektor ($v_{61\text{-}66}^{zuk}$) und/oder eine zukünftigen Pose eines Fußgängers (61-66) vorherzusagen.

## Claims

1. Method for predicting (30) at least one future speed vector ($v_{61\text{-}66}^{zuk}$) and/or a future pose of a pedestrian (61-66) in a prediction region (80), **characterized in that** that a map (11) of the prediction region (80), through which the vehicle will move in the future and which contains all the geographical features of the prediction region (80), as created by sensors of a vehicle, and current speed vectors ($v_{61\text{-}66}^{akt}$) of further pedestrians (61-66) in the prediction region (80) are taken into account in the prediction, wherein the map (11) is used to create a movement plan (21), in which it is possible to see the sections of the prediction region (80), which is not blocked by obstacles, in which pedestrians (61-66) can move.

2. Method according to Claim 1, **characterized in that**, for the prediction (30), pedestrians (61-63) in the prediction region (80) are combined (53) into groups, wherein current poses and current speed vectors ($v_{61\text{-}63}^{akt}$) of all members of a group are used to determine a current pose and a current speed vector ($v_{70}^{akt}$) of the group.

3. Method according to Claim 1 or 2, **characterized in that** social interactions ($F_{61\text{-}66}^{soc}$, $F_{61\text{-}63}^{att}$, $F_{61\text{-}62}^{vis}$) between the pedestrians (61-66) are taken into account (52) in each case in the prediction (30).

4. Method according to one of Claims 1 to 3, **characterized in that** each pedestrian (61-66) is assigned (34) a destination and it is taken into account in the prediction (30) that this pedestrian is moving towards the destination.

5. Method according to one of Claims 1 to 4, **characterized in that** the prediction (30) is carried out in multiple temporal substeps, wherein, for each substep, all values taken into account in the prediction of the speed vectors ($v_{61\text{-}66}^{zuk}$) are recalculated.

6. Method according to Claim 5, **characterized in that** a future pose of the pedestrian (61-66) is determined in each substep and a movement map of the pedestrian (61-66) is created (35) from all determined future poses.

7. Method according to one of Claims 1 to 6, **characterized in that** current poses and current speed vectors ($v_{61\text{-}66}^{akt}$) of the pedestrians (61-66) are determined by means of at least one sensor (91) selected from the group consisting of monocular sensors, stereo sensors and depth sensors.

8. Computer program which is configured to carry out each step of the method according to one of Claims 1 to 7.

9. Computer program according to Claim 8, comprising a prediction module (20) with a movement plan (21), tracklets (22) and social context information (23) used for the prediction (30).

**10.** Machine-readable storage medium on which a computer program according to Claim 8 or 9 is stored.

**11.** Electronic control unit (93) which is configured to predict a future speed vector ($v_{61-66}^{zuk}$) and/or a future pose of a pedestrian (61-66) by means of a method according to one of Claims 1 to 7.

## Revendications

**1.** Procédé de prévision (30) d'au moins un vecteur de vitesse futur ($v_{61-66}^{zuk}$) et/ou d'une pose future d'un piéton (61-66) dans une zone de prévision (80), **caractérisé en ce qu'**une carte (11) de la zone de prévision (80), établie par des capteurs d'un véhicule, à travers laquelle le véhicule se déplacera à l'avenir et contenant toutes les caractéristiques géographiques de la zone de prévision (80), ainsi que des vecteurs de vitesse actuels ($v_{61-66}^{akt}$) d'autres piétons (61-66) se trouvant dans la zone de prévision (80), sont pris en compte dans la prévision, un plan de mouvement (21) étant établi à partir de la carte (11), lequel indique les parties de la zone de prévision (80), qui n'est pas bloquée par des obstacles, dans lesquelles les piétons (61-66) peuvent se déplacer.

**2.** Procédé selon la revendication 1, **caractérisé en ce que**, pour la prévision (30), les piétons (61-63) se trouvant dans la zone de prévision (80) sont regroupés en groupes (53), une pose actuelle et un vecteur de vitesse actuel ($v_{70}^{akt}$) du groupe étant déterminés à partir de poses actuelles et de vecteurs de vitesse actuels ($v_{61-63}^{akt}$) de tous les membres d'un groupe.

**3.** Procédé selon la revendication 1 ou 2, **caractérisé en ce que** des interactions sociales ($F_{61-66}^{soc}$, $F_{61-63}^{att}$, $F_{61-62}^{vis}$) entre les piétons (61-66) sont prises en compte dans la prévision (30) (52).

**4.** Procédé selon l'une des revendications 1 à 3, **caractérisé en ce qu'**une cible est attribuée (34) à chaque piéton (61-66) et **en ce que**, lors de la prévision (30), le fait que celui-ci se déplace vers la cible est pris en compte.

**5.** Procédé selon l'une des revendications 1 à 4, **caractérisé en ce que** la prévision (30) est effectuée en plusieurs sous-étapes temporelles, toutes les valeurs prises en compte dans la prévision des vecteurs de vitesse ($v_{61-66}^{zuk}$) étant recalculées pour chaque sous-étape.

**6.** Procédé selon la revendication 5, **caractérisé en ce que**, lors de chaque sous-étape, une future pose du piéton (61-66) est déterminée et **en ce qu'**une carte de mouvement du piéton (61-66) est établie à partir de toutes les futures poses déterminées (35).

**7.** Procédé selon l'une des revendications 1 à 6, **caractérisé en ce que** les poses actuelles et les vecteurs de vitesse actuels ($v_{61-66}^{akt}$) du piéton (61-66) sont déterminés au moyen d'au moins un capteur (91) qui est sélectionné dans le groupe composé de capteurs monoculaires, de capteurs stéréo et de capteurs de profondeur.

**8.** Programme informatique conçu pour mettre en œuvre chaque étape du procédé selon l'une des revendications 1 à 7.

**9.** Programme informatique selon la revendication 8, comportant un module de prévision (20) doté d'un plan de mouvement (21), de mini-trajectoires (22) et d'informations contextuelles sociales (23), qui sont utilisés pour la prévision (30).

**10.** Support de stockage lisible par machine, sur lequel est enregistré un programme informatique selon la revendication 8 ou 9.

**11.** Appareil de commande électronique (93), conçu pour prévoir, au moyen d'un procédé selon l'une des revendications 1 à 7, un futur vecteur de vitesse ($v_{61-66}^{zuk}$) et/ou une pose future d'un piéton (61-66).

Fig. 1

# Fig. 2

EP 3 844 664 B1

# Fig. 3

# Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9233659 B2
- WO 2015177648 A1
- US 20070230792 A1
- US 2013329958 A1
- CN 106663193 A

**In der Beschreibung aufgeführte Nicht-Patentliteratur**

- Vehicle and Pedestrian Collision Prevention System based on Smart Video Surveillance and C2I Communication. **D. BECKER et al.** 17th International IEEE Conference on Intelligent Transportation Systems (ITSC). IEEE, 2014, 3088-3093
- **D. BRSCIC** ; **T. KANDA** ; **T. IKEDA** ; **T. MIYASHITA**. Person position and body direction tracking in large public spaces using 3D range sensors. *IEEE Transactions on Human-Machine Systems*, 2013, vol. 43 (6), 522-534
- **V. KARASEV** ; **A. AYVACI** ; **B. HEISELE** ; **S. SOATTO**. Intent-aware longterm prediction of pedestrian motion. *2016 IEEE International Conference on Robotics and Automation (ICRA)*, May 2016
- **J. ELFRING** ; **R. VAN DE MOLENGRAFT** ; **M. STEINBUCH**. Learning intentions for improved human motion prediction. *Robotics and Autonomous Systems*, 2014, vol. 62 (4), 591-602